# EUROPÄISCHE PATENTSCHRIFT

(11) **EP 0 479 290 B1**
(45) Veröffentlichungstag und Bekanntmachung des Hinweises auf die Patenterteilung: **28.12.1994**
(21) Anmeldenummer: 91116872.2
(22) Anmeldetag: 02.10.1991
(51) Int. Cl.: G07F 7/00, G07F 15/00

(54) **Vorrichtung zur Verrechnung von Stromentnahme**
Apparatus for accounting current consumption
Dispositif pour la comptabilisation de la consommation de courant

(30) Priorität: 04.10.1990 AT 2011/90
(43) Veröffentlichungstag der Anmeldung: 08.04.1992
(73) Patentinhaber: Siemens Aktiengesellschaft Österreich, 1210 Wien (AT); SIEMENS AKTIENGESELLSCHAFT, 80333 München (DE)
(72) Erfinder: Hrncirik, Peter, Dipl.-Ing., A-1100 Wien (AT); Perz, Werner, Dipl.-Ing., A-3100 St. Pölten (AT)

(56) Entgegenhaltungen:
- EP-A- 0 063 893
- WO-A-86/03915
- GB-A- 2 208 955
- GB-A- 2 225 471
- US-A- 4 240 030
- US-A- 4 777 354

## Beschreibung

Die Erfindung betrifft eine Vorrichtung zur Verrechnung von Stromentnahme mit einer freigebbaren Stromsperrvorrichtung zu angeschlossenen Verbrauchern, wobei mindestens ein Elektrizitätszähler mit einem Mikrocomputer verbunden ist, an den eine Anzeigevorrichtung und eine Wertkarteneinheit angeschlossen sind und wobei mit dem Einschieben einer gültigen Wertkarte in die Wertkarteneinheit (WE) die Stromsperrvorrichtung (S) freigegeben und die Wertkarte vor ihrer Entnahme vollständig bzw. in Stufen von zumindest einem Großteil der maximal verbrauchbaren Strommenge entwertet ist.

Eine gattungsgemäße Vorrichtung ist aus der Druckschrift GB-A-2 208 955 bekannt. Bei dieser Vorrichtung wird ein über die Wertkarte abgebuchter Geldbetrag durch vollständigen Verbrauch, d.h. einer entsprechenden Stromentnahme als Gegenleistung genutzt.

Das Dokument WO-A-86/03915 befaßt sich mit einem Zahlungssystem für Telefongeräte, wobei unter Verwendung einer Telefonkarte ein nicht verbrauchter Restwert auf der Telefonkarte zurückgelassen wird. Dabei wird die zum Bezahlen des Telefongesprächs eingeschobene Telefonkarte verschiedenen Prüfungen unterzogen, bevor die Fernsprechverbindung hergestellt wird. Das auf der Telefonkarte gespeicherte Guthaben wird in einen Speicher übertragen. Nach Beendigung einer Gesprächsverbindung wird zunächst der Inhalt des Speichers um die Gesprächsgebühr verringert und dann der resultierende restliche Speicherbetrag auf den Magnetspeicher der Telefonkarte zurückgeschrieben, so daß auf dieser der Restwert verbleibt.

Aus der GB-A 2 225 471 ist ein Bezahlungssystem für kommunale Versorgungseinrichtungen bekannt. Die Basis ist ein Schlüssel mit nicht flüchtigem Speicher und beispielsweise einem Elektrizitätszähler mit Schlüsselaufnahme und Berechtigungsprüfung. Die vorausbezahlte Strommenge wird entsprechend des Tarifs abgebucht. Zur Verrechnung kann es auch genügen, beispielsweise einmal pro Quartal den Schlüssel in den Elektrizitätszähler einzuschieben. Andernfalls erfolgt eine Sperrung. Beim Versorgungsunternehmen wird nach Vorlage des Schlüssels eine Rechnung ausgestellt bzw. die Vorauszahlung aufgebucht.

Aus der EP-A 85 497 ist die Verwendung von magnetischen Kartenlesern bei Elektrizitätszählern bekannt. Die WO 81/3662 beschreibt ein System für Abbuchungskarten. Die Wertimpulse werden nacheinander abgebucht. Auch aus der CH 622 636 ist die Verwendung von Abbuchungskarten für Elektrizitätszähler bekannt.

Elektrizitätszähler mit Einwurf von Münzen oder Jetons finden beispielsweise in Waschküchen Verwendung und ermöglichen eine entsprechende Stromentnahme. Eine Geldrückgabe bei früher gewunschter Unterbrechung des Stromflusses ist nicht möglich.

Der Erfindung liegt die Aufgabe zugrunde, einen flexibleren Einsatz von Elektrizitätszählern zu ermöglichen, wobei Betreiber und Kunden vor diversen Verlusten zu schützen sind.

Dies wird erfindungsgemäß dadurch erreicht, daß mit dem Einschieben einer gültigen Wertkarte in die Wertkarteneinheit die Stromsperrvorrichtung freigegeben und die Wertkarte vor der Entnahme vollständig bzw. in Stufen von zumindest einem Großteil der maximal verbrauchbaren Strommenge entwertet ist, daß nach einem neuerlichen Einschieben derselben Wertkarte ein allfälliger Restwert auf die Wertkarte gebucht und die Vorrichtung in der Zwischenzeit für andere Benutzer gesperrt ist.

Dadurch ist die Entnahme beliebiger Strommengen möglich. Die Wertkarte dient gleichsam als Schlüssel und ihre Entnahme während der Stromlieferung gewährleistet, daß nicht manipuliert werden kann. Da Strommengen im allgemeinen über einen längeren Zeitraum entnommen werden, wird sich der Kunde nicht so, wie beispielsweise bei einem Telefon, im Bereich des Elektrizitätszählers und seiner Wertkarte aufhalten. Durch die Mitnahme der Wertkarte wird er von Manipulationen zu seinen Ungunsten geschützt. Gleichzeitig ist die Bezahlung des Stromes für den Betreiber gesichert, da ein entsprechender Wert von der Karte abgebucht wurde. Außerdem ist es dem Betreiber möglich, beispielsweise mit einer Generalkarte Strompreisänderungen einzugeben und bei Verlust der Karte durch den Kunden die Sperre zu lösen. Die maximal gelieferte Strommenge entspricht dem ursprünglich auf die Wertkarte gebuchten Betrag. Der Restwert der Karte ist während der Stromentnahme nicht flüchtig gespeichert.

Es ist vorteilhaft, daß die Wertkarte eine Chipkarte ist, da auf diese auch Verrechnungsdaten wie Ausgabeort, Strombezugsquelle etc. verzeichnet werden können. Mit einer persönlichen Identifikationsnummer kann die Karte auch vor mißbräuchlicher Verwendung geschützt werden.

Eine Erhöhung der Sicherheit bei der Benutzung der Wertkarte und Einflußnahme durch den Betreiber zur Fehlerdiagnose, Fehlerbehebung und Korrektur ist dadurch möglich, daß eine Eingabevorrichtung angeschlossen ist.

Die Erfindung wird anhand eines Ausführungsbeispieles mit einer Zeichnung näher erläutert. Die Fig. zeigt ein schematisches Blockschaltbild des Ausführungsbeispieles.

Die Fig. zeigt das Blockschaltbild eines Stromversorgungssystems für private Verbraucher mit direkt abbuchenden Elektrizitätszählern Z. Jeder Elektrizitätszähler Z ist über eine als Schütz S ausgebildete Stromsperrvorrichtung mit einem Stromerzeuger SE verbunden. Dieser Stromerzeuger SE kann beispielsweise das öffentliche Netz oder eine Solarstromanlage sein. Den Elektrizitätszählern Z sind Verbraucheranschlüsse VA nachgeordnet.

Von den als Drehstrom-Impulsgeberzählern ausgeführten Elektrizitätszählern Z werden die der entnommenen Energie proportionalen Impulse einem Mikrocomputer µC zugeführt. Dieser ermittelt den dem Kilowattstundenpreis entsprechenden Geldbetrag. Die Bezahlung des Betrages erfolgt über eine Chipkarte, die in eine mit dem Mikrocomputer µC verbundene Wertkarteneinheit WE eingeschoben wird. Nacheinander können unterschiedliche Kunden ihren Verbraucher über den jeweils eigenen Elektrizitätszähler Z anschließen. Zuerst wird die Chipkarte über den Mikrocomputer µC auf die Berechtigung und den aufgebuchten Geldwert geprüft. Über eine mit dem Mikrocomputer µC verbundene Anzeigevorrichtung AV wird der Kunde aufgefordert, seinen Verbraucher anzustecken. Dazu dient eine Flüssigkristall-Anzeige. Diese wird sowohl zur Bedienerführung verwendet, als auch zur Anzeige der entnommenen Energie und des entsprechenden Geldbetrages. Über eine mit dem Mikrocomputer µC verbundene Eingabevorrichtung EV kann der Kunde die gewünschte Strommenge eingeben. Nach dem Abziehen der Chipkarte aus der Wertkarteneinheit WE wird über den Schütz S die Stromzufuhr freigegeben. Die Chipkarte dient als Schlüssel und ist nach der Entnahme voll entwertet.

Nach dem Ziehen der Chipkarte läuft die Stromentnahme, sie kann jedoch durch erneutes Einstecken derselben Karte jederzeit unterbrochen werden. Spätestens nachdem der gesamte Geldbetrag verbraucht ist, wird die Stromzuführung unterbrochen. Beim Einstecken derselben Karte wird diese erneut vom Mikrocomputer µC auf Berechtigung geprüft. Die entnommene Energie und der entsprechende Geldbetrag wird über die Anzeigevorrichtung AV angezeigt und von der Chipkarte abgebucht. Das bedeutet strenggenommen, daß der Differenzbetrag auf die entwertete Karte aufgebucht wird. Der Restwert der Chipkarte wird ebenfalls auf der Anzeigevorrichtung AV angezeigt. Zusätzlich ist es möglich, über ein mit dem Mikrocomputer µC verbundenes Zeitlaufwerk U die Dauer der Stromzuführung zu begrenzen. Die Stromzählerimpulse werden mit Zeitimpulsen kombiniert, sodaß neben der Stromgebühr auch weitere Gebühren, wie beispielsweise eine Grundgebühr oder eine Parkgebühr, verrechnet werden kann.

Diese Stromentnahmevorrichtung kann zum Aufladen von Elektroautomobilen an Elektrotankstellen verwendet werden. Diese Tankstellen können sich auch auf Parkplätzen oder in Garagen befinden. Die Stromentnahme beim Aufladen von Batterien hängt sehr stark von der Ladekurve ab. Durch die erfindungsgemäße Art der Verrechnung braucht sich der Fahrer eines Elektroautomobils nicht darum kümmern, wieviel Geld er während seiner Abwesenheit für den Ladestrom im voraus einwerfen müßte. Er startet den Ladevorgang durch das Ziehen seiner Wertkarte aus der Wertkarteneinheit WE und mit dem Wiedereinstecken wird der Ladevorgang gestoppt und die Verriegelung des Ladekabels aufgehoben. Während der Abwesenheit des Fahrzeuglenkers ist der angeschlossene Stecker mit einem Rollbalken gesichert, der sich erst nach erfolgter Berechtigungsprüfung wiederum öffnet. Dadurch sind unlautere Manipulationen zum Schaden des Autolenkers, wie das Ziehen des Steckers, unmöglich. Weiters wird durch die erfindungsgemäße Vorrichtung auch die Stromverrechnung für Camping-Plätze, Zweitwohnsitze und Ferienappartements beträchtlich erleichtert. Die Stromentnahmevorrichtung ist natürlich auch bei Gemeinschaftswaschküchen und ähnlichen Einrichtungen einsetzbar.

Der Vertrieb bzw. die Wiederaufwertung von Chipkarten kann von Energieversorgungsunternehmungen, Autofahrerorganisationen, Hausverwaltungen oder ähnlichen Stellen mit Hilfe einer Masterkarte übernommen werden. Im Speicher der Chipkarte befinden sich alle Informationen der Verrechnung. So beispielsweise wo die Karte gekauft wurde, welches Energieversorgungsunternehmen Stromlieferant war usw. Diese Direktzahlung erleichtert die überregionale Verwendung der Karte und die Verrechnung unterschiedlicher Strompreise durch private Betreiber. Es erübrigt sich eine zentrale Verwaltung, wie sie bei Telephongebühren üblich ist.

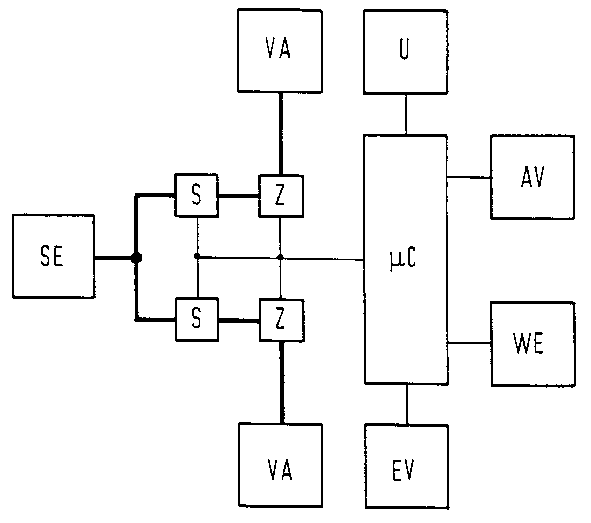

## Patentansprüche

1. Vorrichtung zur Verrechnung von Stromentnahme mit einer freigebbaren Stromsperrvorrichtung (S) zu angeschlossenen Verbrauchern (VA), wobei mindestens ein Elektrizitätszähler (Z) mit einem Mikrocomputer (µC) verbunden ist, an den eine Anzeigevorrichtung (AV) und eine Wertkarteneinheit (WE) angeschlossen sind, und wobei mit dem Einschieben einer gültigen Wertkarte in die Wertkarteneinheit (WE) die Stromsperrvorrichtung (S) freigegeben und die Wertkarte vor ihrer Entnahme vollständig bzw. in Stufen von zumindest einem Großteil der maximal verbrauchbaren Strommenge entwertet ist, **dadurch gekennzeichnet,** daß nach einem neuerlichen Einschieben derselben Wertkarte ein allfälliger Restwert auf die Wertkarte zurückgebucht wird und die Vorrichtung in der Zwischenzeit für andere Benutzer gesperrt ist.

2. Vorrichtung nach Anspruch 1, **dadurch gekennzeichnet**, daß die Wertkarte eine Chipkarte ist.

3. Vorrichtung nach Anspruch 1 oder 2, **dadurch** **gekennzeichnet,** daß eine Eingabevorrichtung (EV) angeschlossen ist.

## Claims

1. A device for charging for current consumption with a releasable power blocking device (S) for connected consumers (VA), where at least one electricity meter (Z) is connected to a microcomputer (µC) to which a display device (AV) and a credit card unit (WE) are connected and where, on the insertion of a valid credit card into the credit card unit (WE), the power blocking device (S) is released and prior to its removal the credit card is devalued completely or in stages by at least a large part of the maximum consumable amount of power, characterised in that following a re-insertion of the same card any remaining value is re-entered on the credit card and in the intervening time the device is barred to other users.

2. A device as claimed in Claim 1, characterised in that the credit card is a chip card.

3. A device as claimed in Claim 1 or 2, characterised in that an input device (EV) is connected.

## Revendications

1. Dispositif pour calculer une consommation de courant, comportant un dispositif, libérable (S), de blocage du courant relié à des appareils d'utilisation (VA) raccordés, et dans lequel au moins un compteur d'électricité (Z) est relié à un micro-ordinateur (µC), auquel sont raccordés un dispositif d'affichage (AV) et une unité (WE) à carte à mémoire, et dans lequel le dispositif (S) de blocage du courant est libéré lors de l'insertion d'une carte à mémoire valable dans l'unité (WE) à carte à mémoire, et, avant son prélèvement, la valeur de la carte à mémoire est complètement annulée ou réduite par échelons d'au moins une grande partie de la quantité de courant pouvant être consommée au maximum, caractérisé par le fait qu'après une nouvelle insertion de la même carte à mémoire, une éventuelle valeur résiduelle est transférée en retour à la carte à mémoire et le dispositif est bloqué entre-temps pour d'autres utilisateurs.

2. Dispositif suivant la revendication 1, caractérisé par le fait que la carte à mémoire est une carte à puce.

3. Dispositif suivant la revendication 1 ou 2, caractérisé par le fait qu'un dispositif d'introduction (EV) est raccordé.
